# EUROPÄISCHE PATENTANMELDUNG

(11) **EP 2 327 468 A1**
(43) Veröffentlichungstag der Anmeldung: **01.06.2011**
(21) Anmeldenummer: 10178561.6
(22) Anmeldetag: 23.09.2010
(51) Int. Cl.: B01D 69/10, B01D 71/02, B01D 67/00

(54) **Verwendung einer keramischen Membran auf Basis eines Polymerfasern aufweisenden Substrates als Feuchtespeicher**

(30) Priorität: 13.11.2009 DE 102009046673
(71) Anmelder: Evonik Degussa GmbH, 45128 Essen (DE)
(72) Erfinder: Nun, Edwin, 48727, Billerbeck (DE); Bergandt, Heike, 45772, Marl (DE); Banken, Sigrid, 46282, Dorsten (DE)

(57) **Zusammenfassung**

Die vorliegende Erfindung betrifft die Verwendung einer Membran, insbesondere Mikrofiltrationsmembran, die ein Substrat auf Basis von Polymerfasern und eine keramische Beschichtung aufweist, als Speichermedium für Feuchtigkeit.

## Beschreibung

Die vorliegende Erfindung betrifft die Verwendung einer Membran, insbesondere Mikrofiltrationsmembran, die ein Substrat auf Basis von Polymerfasern und eine keramische Beschichtung aufweist, als Speichermedium für Feuchtigkeit.

Polymere Folien mit Eigenschaften, Wasserdampf durch die Folien hindurchtreten zu lassen, sind seit langem bekannt. Solche Folien sind zum Beispiel unter den Handelsnamen Goretex oder Sympatex in Sport- und Freizeitkleidung weit verbreitet. Auch weisen solche Gewebe selbstreinigende Eigenschaften auf. Da diese Gewebe für Gase durchlässig sind, und gegen Flüssigkeiten sperrend wirken, können die Gewebe Wassertröpfchen aus feuchten Gasströmen abscheiden. Solche Gewebe können beispielsweise in Tropfenabscheidern verwendet werden.

Verbundwerkstoffe, die Keramiken aufweisen, werden im Stand der Technik als Filtermaterialien und Separatoren verwendet.

Der Vorteil der Keramik aufweisenden Verbundwerkstoffe liegt darin, dass die keramischen Beschichtungen gegenüber den meisten chemischen Substanzen, wie z. B. organischen Lösemitteln, chemisch inert, wasserundurchlässig und zudem überwiegend gegenüber Säuren oder Laugen beständig sind. Aus diesem Grund werden Metalle oft mit Keramiken beschichtet, um das Metall vor chemischen Einflüssen zu schützen. Durch die poröse Oberfläche eines mit einer Keramik beschichteten Verbundwerkstoffes erhöht sich die Abriebsfestigkeit von nachträglich aufgebrachten Lacken oder Schutzüberzügen. Keramiken selbst eignen sich aufgrund ihrer porösen Oberfläche außerdem sehr gut für den Einsatz als Membranen oder Filter.

Der Nachteil der Keramiken bzw. der Keramiken aufweisenden Verbundwerkstoffe ist die Sprödigkeit der Keramik. Mit Keramik beschichtetes Material ist deshalb sehr stoßempfindlich, und die Keramikbeschichtung übersteht kaum eine mechanische Beanspruchung, ohne dass die Oberfläche der Keramik verletzt wird. Da auch das Biegen eines solchen keramischen Verbundwerkstoffes zur Verletzung der Keramikschicht führt, sind die Anwendungsgebiete solcher keramischer Verbundwerkstoffe zur Zeit noch begrenzt.

Keramische Verbundwerkstoffe werden trotz der Nachteile häufig auch in der Filtrationstechnik oder Membrantechnik eingesetzt.

In EP 0 358 338 wird ein Verfahren beschrieben, mit welchem durch Aufbringen einer ein Metalloxidsol aufweisenden wässrigen Lösung und Verfestigen dieser Lösung auf einer Oberfläche, vorzugsweise einer glatten Metalloberfläche, diese Oberfläche durch eine Keramikschicht geschützt werden kann. Der wässrigen Lösung kann zur Verbesserung der Haftung der keramischen Schicht auf der zu schützenden Oberfläche ein Metalloxidpulver und/oder ein Haftverbesserer zugesetzt werden. Das Verfahren beschreibt nicht das Aufbringen von Schichten auf stoffdurchlässige Trägermaterialien.

WO 96/00198 lehrt die Herstellung keramischer Schichten auf Oberflächen von diversen Materialien. Diese beschichteten Materialien können als Membranen zur Nanofiltration eingesetzt werden. Bei diesem Verfahren wird Titandioxidsol mit Aluminiumoxidpulver dispergiert, wobei Salzsäure zur Peptisierung verwendet wird.

US 4,934,139 lehrt ein Verfahren zur Herstellung keramischer Membranen für die Ultrafiltration und Mikrofiltration. Zur Herstellung solcher keramischer Membranen wird ein Sol oder eine Partikelsuspension auf einen porösen Metallträger gebracht und gesintert. Der poröse Träger kann Edelstahl-Sintermetall oder Edelstahlgewebe sein, in dessen Zwischenräume Metallpartikel eingesintert wurden. Metallgewebe mit Zwischenräumen über 100 µm lassen sich ohne Einsintern von Metallpartikeln nach diesem Verfahren nicht herstellen. Das Verfahren vermeidet, dass die Suspension oder das Sol in die Zwischenräume des Trägermaterials eindringen.

In US 5,376,442 und US 5,605,628 wird zur Überbrückung von Zwischenräumen im Trägermaterial ein organischer Binder in die Beschichtungslösung eingearbeitet. Dieser

Binder muss beim Verfestigen wieder entfernt werden, was zu Unregelmäßigkeiten in der Keramikoberfläche und/oder -struktur führen kann.

Ebenso wird in DE 42 10 413 das anorganische Pulver mit Hilfe eines polymeren Harzes fixiert. Dieses Harz muss beim Verfestigen ebenfalls wieder entfernt werden, was zu Unregelmäßigkeiten in der Keramikoberfläche und/oder -struktur führen kann.

In WO 99/15262 wird die Herstellung eines flexiblen, stoffdurchlässigen Verbundwerkstoffes auf Basis eines durchbrochenen Trägermaterials beschreiben. Hierin kann der Träger aus verschiedenen Materialien bestehen. U. a. auch aus polymeren perforierten Folien, Geweben aus Polymer, Naturfaser, Glas und Stahl oder Metallvliesen. Die Beschichtung erfolgt mit einem Sol, welches zu sehr großen Teilen aus Wasser bzw. aus wässrigen Lösungen starker Säuren besteht, in das Partikel der Oxide von Aluminium, Titan, Zirkonium oder Silizium eingerührt wurden. Zudem kann das Sol auch Organosilyl-Verbindungen wie Methyltriethoxysilan enthalten. Diese stoffdurchlässigen Verbundmaterialien lassen sich u. a. als Membranen in der Filtration einsetzen.

Die EP 1 478 451 lehrt die Verwendung von polymeren Vliesmaterialien anstelle der perforierten Folien. So wird nicht zuletzt wegen der größeren Porosität des Vlieses eine deutliche Erhöhung des transmembranen Flusses erreicht. Zudem sind Membranen, die Vliesmaterialien auf Basis von Polymeren aufweisen, deutlich haltbarer und flexibler, als Membranen, die keramische Beschichtungen auf Glas- oder auf Metallgewebe oder -vliesen oder auf Polymerfolien aufweisen.

Solche Membranen werden gemäß der EP 1 478 451 hergestellt, indem ein flächiges, mit einer Vielzahl von Öffnungen versehenes, flexibles Substrat in und auf diesem Substrat mit einer Beschichtung versehen wird, wobei das Material des Substrates ausgewählt ist aus Vliesen von Polymerfasern und die Beschichtung eine poröse, keramische Beschichtung ist, die auf und in das Substrat durch Aufbringen einer Suspension, die zumindest, ein Oxid, der Metalle Al, Zr, Si, Sn, Ti und/oder Y und ein Sol aufweist, auf das Substrat und durch zumindest einmaliges Erwärmen, bei welchem die Suspension auf und im Träger verfestigt wird, aufgebracht wird

Die vielseitige Eignung der Membran als Separator in Batterien, als Träger für Ultrafiltrations-, Nanofiltrations-, Umkehrosmose-, Gastrenn- oder Pervaporationsmembranen oder als Mikrofiltrationsmembran, ihre Haltbarkeit und ihre kostengünstige Herstellung haben das Interesse an weiteren Verwendungsmöglichkeiten geweckt, die keramischen Materialien bisher verwehrt geblieben sind.

Aufgabe der vorliegenden Erfindung war es also, Verwendungsmöglichkeiten für eine Membran mit einem Substrat auf Basis von Polymerfasern und einer keramischen Beschichtung zu finden, die im Stand der Technik zur Zeit nicht realisiert sind oder gar ausgeschlossen waren.

Überraschend wurde gefunden, dass eine Membran, die ein flächiges, mit einer Vielzahl von Öffnungen versehenes, flexibles Substrat mit einer auf und in diesem Substrat befindlichen porösen keramischen Beschichtung umfasst, wobei das Material des Substrates aus Vliesen von Polymerfasern mit einer Porosität von 50 % bis 97 % ausgewählt ist, und die keramische Beschichtung keramische Partikel mit zumindest teilweise einer peptisierten, hydrophoben Sol-Gel-Schicht aufweist, als Wassersperre einsetzbar und zugleich wasserabsorbierend ist.

Gegenstand der vorliegenden Erfindung ist also die Verwendung einer Membran,
umfassend ein flächiges, mit einer Vielzahl von Öffnungen versehenes, flexibles Substrat mit einer auf und in diesem Substrat befindlichen porösen keramischen Beschichtung, wobei
das Material des Substrates ausgewählt ist aus Vliesen von Polymerfasern, wobei die Vliese eine Porosität von 50 % bis 97 % aufweisen, und
die inneren und äußeren Oberflächen der in der Beschichtung vorhandenen keramischen Partikel zumindest teilweise eine peptisierte, hydrophobe Sol-Gel-Schicht aufweisen,
als Membran für die Aufnahme und Abgabe von Wasser aus Luft und von Oberflächen.

Die erfindungsgemäße Verwendung hat den Vorteil, dass die Membran auf einfache Art und Weise einsetzbar ist, ohne dass diese umständlich entsorgt oder getrocknet werden muss, da die Membran das aufgenommene Wasser innerhalb kurzer Zeit wieder abgibt. Weiterhin hat die Verwendung gegenüber dem Stand der Technik den Vorteil der Materialersparnis, da die als Wasserspeicher und -sperre eingesetzte Membran bis zu 20 % ihrer Masse an Wasser aufnimmt und wieder abgibt. Manche Anwendungen, bei denen die Aufnahme und Abgabe von Wasser aus der Luft oder von der Oberfläche wünschenswert wäre, sind der Verwendung konventioneller Materialien gar nicht erst zugänglich. Zum Beispiel können Schaumstoffe, absorbierende Polymere, oder Silica-Gele nicht oder nur unter Hinnahme raschen Verschleißes auf heißen und/oder chemisch aktiven Oberflächen verwendet werden.

Die erfindungsgemäß verwendete Membran umfasst ein flächiges, mit einer Vielzahl von Öffnungen versehenes, flexibles Substrat mit auf und in diesem Substrat befindlichen porösen Beschichtung, die anorganische Komponenten aufweist, und zeichnet sich dadurch aus, dass das Material des Substrates ausgewählt ist aus Vliesen von Polymerfasern, wobei die Vliese eine Porosität von mehr als 50 % aufweisen und dass die Beschichtung eine poröse, keramische Beschichtung ist. Vorzugsweise weist das Substrat eine Porosität von 50 bis 97 % und besonders bevorzugt von 60 bis 90 % und ganz besonders bevorzugt von 70 bis 90 % auf. Die Porosität ist dabei definiert als das Volumen des Vlieses (100 %) minus dem Volumen der Fasern des Vlieses, also dem Anteil am Volumen des Vlieses, der nicht von Material ausgefüllt wird. Das Volumen des Vlieses kann dabei aus den Abmessungen des Vlieses berechnet werden. Das Volumen der Fasern ergibt sich aus dem gemessen an Gewicht des betrachteten Vlieses und der Dichte der Polymerfasern. Die große Porosität des Substrates ermöglicht auch eine höhere Porosität der erfindungsgemäßen Membran, weshalb höhere transmembrane Flüsse mit der erfindungsgemäßen Membran erzielbar sind.

Es wurde gefunden, dass diese transmembranen Flüsse die Eigenschaft der Membran ermöglichen, Wasser zu speichern und wieder abzugeben.

Die erfindungsgemäß verwendete Membran weist außerdem vorzugsweise ein Substrat auf, welches eine Dicke von 10 bis 200 µm aufweist. Es kann besonders vorteilhaft sein, wenn die erfindungsgemäße Membran ein Substrat aufweist, welches eine Dicke von 30 bis 100 µm, bevorzugt von 25 bis 50 µm und besonders bevorzugt von 30 bis 40 µm aufweist. Auch durch die geringe Dicke des eingesetzten Substrates wird erreicht, dass der transmembrane Fluss durch die Membran größer ist als bei herkömmlichen Membranen.

Die Polymerfasern sind bevorzugt ausgewählt aus Polyacrylnitril, Polyamiden, Polyimiden, Polyacrylaten, Polytetrafluorethylen, Polyester, wie z. B. Polyethylenterephthalat und/oder Polyolefinen, wie z. B. Polypropylen, Polyethylen oder Mischungen dieser Polymere. Aber auch alle anderen bekannten Polymerfasern sind denkbar. Bevorzugt weist die erfindungsgemäße Membran Polymerfasern auf, die eine Erweichungstemperatur von größer 100 °C und eine Schmelztemperatur von größer 110 °C aufweisen. Bei Polymerfasern mit niedrigeren Temperaturgrenzen verkleinern sich auch die Anwendungsgebiete. Bevorzugte Membrane sind bis zu einer Temperatur von bis zu 150 °C, vorzugsweise bis zu einer Temperatur von 120 bis 150 °C und ganz besonders bevorzugt bis zu einer Temperatur von 121 °C einsetzbar. Es kann vorteilhaft sein, wenn die Polymerfasern einen Durchmesser von 1 bis 25 µm, vorzugsweise von 2 bis 15 µm aufweisen. Sind die Polymerfasern deutlich dicker als die genannten Bereiche, leidet die Flexibilität des Substrates und damit auch die der Membran.

Im Sinne der beanspruchten Verwendung werden unter Polymerfasern auch Fasern von Polymeren verstanden, die durch eine thermische Behandlung chemisch oder strukturell teilweise verändert wurden, wie z. B. teilweise karbonisierte Polymerfasern.

Die auf und in dem Substrat befindliche keramische Beschichtung weist bevorzugt ein Oxid, der Metalle Al, Zr, Si, Sn, Ti und/oder Y, auf. Besonders bevorzugt weist die auf und in dem Substrat befindliche Beschichtung ein Oxid der Metalle Al, Zr, Ti und/oder Si, als anorganische Komponente auf.

Es kann vorteilhaft sein, wenn die keramische Beschichtung bzw. die anorganischen Komponenten, die die Beschichtung ausmachen über Haftvermittler an das Substrat, insbesondere die Polymerfasern gebunden sind. Typische Haftvermittler sind organofunktionelle Silane, wie sie beispielsweise von der Fa. Degussa unter dem Handelsnamen "Dynasilan" angeboten werden, aber auch reine Oxide wie ZrO₂, TiO₂, SiO₂ oder Al₂O₃ können für einige Fasermaterialien geeignete Haftvermittler sein. Je nach Herstellungsbedingungen und verwendetem Haftvermittler können die Haftvermittler in der erfindungsgemäßen Membran noch nachweisbar vorhanden sein.

Es kann vorteilhaft sein, wenn das Vlies oder Gewebe zuerst mit einem Haftvermittler vorbeschichtet wurde. Entsprechend weist dann eine solche Membran im Innern ein Vlies, vorzugsweise ein Polymervlies auf, dessen Fasern mit einer dünnen Schicht eines Haftvermittlers (wie. z. B. einem Metalloxid oder einer Organosilanverbindung) ausgestattet sind. Im und auf dem polymeren, vorbeschichteten Träger befindet sich das poröse Keramikmaterial.

Vorzugsweise liegt in der Beschichtung zumindest eine anorganische Komponente in einer Korngrößenfraktion mit einer mittleren Korngröße von 1 bis 250 nm oder mit einer mittleren Korngröße von 251 bis 10000 nm oder 1000 bis 10000 nm, besonders bevorzugt von 250 bis 1750 nm vor. Es kann vorteilhaft sein, wenn die erfindungsgemäße Membran eine Beschichtung aufweist, die zumindest zwei Korngrößenfraktionen zumindest einer anorganischen Komponente aufweist. Ebenso kann es vorteilhaft sein, wenn die Beschichtung zumindest zwei Korngrößenfraktionen von zumindest zwei anorganischen Komponenten aufweist. Das Komgrößenverhältnis kann von 1 : 1 bis 1 : 10000, vorzugsweise von 1 : 1 bis 1 : 100 betragen. Das Mengenverhältnis der Korngrößenfraktionen im Verbundwerkstoff kann vorzugsweise von 0,01 : 1 bis 1 : 0,01 betragen.

Die Stoffdurchlässigkeit und die Porosität und damit auch der transmembrane Fluss der erfindungsgemäßen Membran wird auch durch die Korngröße der verwendeten anorganischen Komponenten begrenzt.

Bevorzugt weist die erfindungsgemäß verwendete Membran eine Porosität von 10 % bis 70 %, bevorzugt von 20 % bis 60 % und besonders bevorzugt von 30 % bis 50 % auf. Die Porosität bezieht sich dabei auf die erreichbaren, also offenen Poren. Die Porosität kann dabei mittels der bekannten Methode der Quecksilberporosimetrie bestimmt werden oder kann aus dem Volumen und der Dichte der verwendeten Einsatzstoffe errechnet werden, wenn davon ausgegangen wird, dass nur offene Poren vorliegen. Die mittlere Porenweite der erfindungsgemäßen Membran beträgt bevorzugt von 10 bis 2000 nm, ganz besonders bevorzugt von 50 bis 800 nm.

Vorzugsweise kann die Membran als Geräteeinsatz in Geräten für die Be- und/oder Entfeuchtung von Raumluft und/oder Geräteluft verwendet werden, besonders bevorzugt in Klimaanlagen, bei der Belüftung technischer Anlagen, und/oder in Reinräumen.

Weiterhin kann die Verwendung der Membran als Membran oder Wandbelag zur Aufnahme von Feuchtigkeit aus porösem Baumaterial vorteilhaft sein, besonders bevorzugt als Wandbelag auf feuchtem Untergrund.

Vorteilhaft kann auch die Verwendung der Membran als Rollenmaterial zur Trocknung und/oder Befeuchtung von Bahnenware oder gedruckten Strukturen sein. Besonders bevorzugt ist die erfindungsgemäße Verwendung bei Kalandrierprozessen. Diese hat den Vorteil, Werfen und/oder feuchtebedingtes Wölben des kalandrierten Materials zu meiden oder zumindest zu mindern. Es kann ebenso vorteilhaft sein, die Membran erfindungsgemäß zu verwenden als Membran oder Einlage in Textilien für Berufs- und Sportbekleidung, Camping- und Sport-, Spiel- und Freizeitausstattung, Büromöbel, Polstermöbel. Besonders bevorzugt ist die Verwendung als Matten, in Sportmatten, in Isomatten, Filter, Kassetten, und/oder Einlagen zur Trocknung der Luft in Heiz- und/oder Kühlanlagen, in Wärmetauschern.

Die oben genannten Verwendungen sind gerade deshalb vorteilhaft, weil sich die erfindungsgemäß verwendete Membran bei der Aufnahme von Feuchtigkeit nicht ausdehnt, im Gegensatz zu der bekannten Begleiterscheinung bei wasseraufnehmenden Polyacrylsäuren, die besser bekannt sind unter der Bezeichnung "Superabsorber". Die mit der Aufnahme von Wasser durch Superabsorber einhergehende Volumenausdehnung ist gerade bei der Verwendung in Geräten, Bekleidung bzw. Belägen störend, wenn Passform bzw. Abmaße eingehalten werden müssen, oder wenn die Platzverhältnisse beengt sind.

Die erfindungsgemäß verwendeten Membranen zeichnen sich dadurch aus, dass sie eine Zugfestigkeit von mindestens 1 N/cm, vorzugsweise von 3 N/cm und ganz besonders bevorzugt von größer 6 N/cm aufweisen. Diese Membranen sind vorzugsweise flexibel und lassen sich vorzugsweise ohne Beschädigung bis auf jeden Radius bis herab zu 100 m, vorzugsweise bis herab zu 50 mm und ganz besonders bevorzugt bis herab zu 2 mm biegen. Die gute Biegbarkeit der erfindungsgemäß verwendeten Membran hat den Vorteil, dass beim Einsatz in der Mikrofiltration plötzliche Druckschwankungen durch die Membran problemlos vertragen werden können, ohne dass die Membran beschädigt wird.

Die erfindungsgemäß verwendete Membran ist vorzugsweise erhältlich durch ein Verfahren zur Herstellung einer Membran, welches dadurch gekennzeichnet ist, dass ein flächiges, mit einer Vielzahl von Öffnungen versehenes, flexibles Substrat in und auf diesem Substrat mit einer Beschichtung versehen wird, wobei das Material des Substrates ausgewählt ist aus Vliesen von Polymerfasern, wobei die Vliese vorzugsweise eine Porosität von größer 50 % aufweisen und die Beschichtung eine poröse, keramische Beschichtung ist, die auf das Substrat durch Aufbringen einer Suspension, die zumindest, ein Oxid, der Metalle Al, Zr, Si, Sn, Ti und/oder Y und ein Sol aufweist, auf das Substrat und durch zumindest einmaliges Erwärmen, bei welchem die Suspension auf und im Substrat verfestigt wird, aufgebracht wird. Die Suspension kann weitere anorganische Komponenten aufweisen, insbesondere solche, wie sie oben bereits als anorganische Komponenten beschrieben wurden.

Die Suspension kann z. B. durch Aufdrucken, Aufpressen, Einpressen Aufrollen, Aufrakeln, Aufstreichen, Tauchen, Spritzen oder Aufgießen auf und in das Substrat gebracht werden.

Das Material des Substrates ist vorzugsweise ausgewählt aus Vliesen von Polymerfasern mit einer Dicke von 10 bis 200 µm Es kann besonders vorteilhaft sein, wenn die erfindungsgemäß verwendete Membran ein Substrat aufweist, welches eine Dicke von 30 bis 100 µm, bevorzugt von 25 bis 50 µm aufweist.

Die Polymerfasern sind bevorzugt ausgewählt aus Polyacrylnitril, Polyamiden, Polyimiden,

Polyacrylaten, Polytetrafluorethylen, Polyester, wie z. B. Polyethylenterephthalat und/oder Polyolefinen. Aber auch alle anderen bekannten Polymerfasern sind einsetzbar. Bevorzugt weist die erfindungsgemäße Membran Polymerfasern auf, die eine Erweichungstemperatur von größer 100 °C und eine Schmelztemperatur von größer 110 °C aufweisen. Bei Polymerfasern mit niedrigeren Temperaturgrenzen verkleinern sich auch die Anwendungsgebiete. Bevorzugte Membranen sind bis zu einer Temperatur von bis zu 150 °C, vorzugsweise bis zu einer Temperatur von 120 bis 150 °C und ganz besonders bevorzugt bis zu einer Temperatur von 121 °C einsetzbar. Es kann vorteilhaft sein, wenn die Polymerfasern einen Durchmesser von 1 bis 25 µm, vorzugsweise von 2 bis 15 µm aufweisen. Sind die Polymerfasern deutlich dicker als die genannten Bereiche, leidet die Flexibilität des Substrates und damit auch die der Membran.

Die zur Herstellung der Beschichtung verwendete Suspension weist vorzugsweise zumindest ein anorganisches Oxid des Aluminiums, Titans, Siliziums und/oder Zirkoniums und zumindest ein Sol, zumindest ein Halbmetalloxidsol oder zumindest ein Mischmetalloxidsol oder eine Mischung dieser Sole auf, und wird durch Suspendieren zumindest einer anorganischen Komponente in zumindest einem dieser Sole hergestellt.

Die Sole werden durch Hydrolisieren zumindest einer Verbindung, vorzugsweise zumindest einer Metallverbindung, zumindest einer Halbmetallverbindung oder zumindest einer Mischmetallverbindung erhalten. Als zu hydrolysierende Verbindung wird vorzugsweise zumindest ein Metallnitrat, ein Metallchlorid, ein Metallcarbonat, eine Metallalkoholatverbindung oder zumindest eine Halbmetallalkoholatverbindung, besonders bevorzugt zumindest eine Metallalkoholatverbindung hydrolisiert. Als Metallalkoholatverbindung oder Halbmetallalkoholatverbindung wird vorzugsweise eine Alkoholatverbindung der Elemente Zr, Al, Si, Ti, Sn, und Y oder zumindest ein Metallnitrat, Metallcarbonat oder Metallhalogenid ausgewählt aus den Metallsalzen der Elemente Zr, Al, Ti, Si, Sn, und Y als Metallverbindung hydrolisiert. Die Hydrolyse erfolgt vorzugsweise in Gegenwart von Wasser, Wasserdampf, Eis, oder einer Säure oder eine Kombination dieser Verbindungen.

In einer Ausführungsvariante des Verfahrens werden durch Hydrolyse der zu hydrolisierenden Verbindungen partikuläre Sole hergestellt. Diese partikulären Sole zeichnen sich dadurch aus, dass die in dem Sol durch Hydrolyse entstandenen Verbindungen partikulär vorliegen. Die partikulären Sole können wie oben oder wie in WO 99/15262 beschrieben hergestellt werden. Diese Sole weisen üblicherweise einen sehr hohen Wassergehalt auf, der bevorzugt größer als 50 Gew.-% ist. Es kann vorteilhaft sein, die zu hydrolysierende Verbindung vor der Hydrolyse in Alkohol oder eine Säure oder eine Kombination dieser Flüssigkeiten zu geben. Die hydrolisierte Verbindung kann zum Peptisieren mit zumindest einer organischen oder anorganischen Säure, vorzugsweise mit einer 10 bis 60%igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden. Die so hergestellten partikulären Sole können anschließend zur Herstellung von Suspensionen eingesetzt werden, wobei die Herstellung von Suspensionen zum Aufbringen auf Vliesen bzw. mit polymeren Sol vorbehandelten Polymerfaservliesen bevorzugt ist.

In einer weiteren Ausführungsvariante des Verfahrens werden durch Hydrolyse der zu hydrolisierenden Verbindungen polymere Sole hergestellt. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.-%, vorzugsweise sehr viel weniger als 20 Gew.-% an Wasser und/oder wässriger Säure auf. Um auf den bevorzugten Anteil von Wasser und/oder wässriger Säure zu kommen wird die Hydrolyse vorzugsweise so durchgeführt, dass die zu hydrolisierende Verbindung mit dem 0,5 bis 10-fachen Molverhältnis und bevorzugt mit dem halben Molverhältnis Wasser, Wasserdampf oder Eis, bezogen auf die hydrolisierbare Gruppe, der hydrolisierbaren Verbindung, hydrolisiert wird. Eine bis zu 10-fache Menge an Wasser kann bei sehr langsam hydrolisierenden Verbindungen wie z. B. beim Tetraethoxysilan eingesetzt werden. Sehr schnell hydrolisierende Verbindungen wie das Zirkontetraethylat können unter diesen Bedingungen durchaus schon partikuläre Sole bilden, weshalb zur Hydrolyse solcher Verbindungen bevorzugt die 0,5-fache Menge an Wasser eingesetzt wird. Eine Hydrolyse mit weniger als der bevorzugten Menge an Wasser, Wasserdampf, oder Eis führt ebenfalls zu guten Ergebnissen. Wobei ein Unterschreiten der bevorzugten Menge von einem halben Molverhältnis um mehr als 50 % möglich aber nicht sehr sinnvoll ist, da beim Unterschreiten dieses Wertes die Hydrolyse nicht mehr vollständig ist und Beschichtungen auf Basis solcher Sole nicht sehr stabil sind.

Zur Herstellung dieser polymeren Sole mit dem gewünschten sehr geringen Anteil an Wasser und/oder Säure im Sol kann es vorteilhaft sein, wenn die zu hydrolisierende Verbindung in einem organischen Lösemittel, insbesondere Ethanol, Isopropanol, Butanol, Amylalkohol, Hexan, Cyclohexan, Ethylacetat und oder Mischungen dieser Verbindungen, gelöst wird bevor die eigentliche Hydrolyse vorgenommen wird. Ein so hergestelltes Sol kann zur Herstellung der Suspension oder als Haftvermittler in einem Vorbehandlungsschritt eingesetzt werden.

Sowohl die partikulären Sole als auch die polymeren Sole können als Sol in dem Verfahren zur Herstellung der Suspension eingesetzt werden. Neben den Solen, die wie gerade beschrieben erhältlich sind, können prinzipiell auch handelsübliche Sole, wie z. B. Zirkonnitratsol oder Silicasol eingesetzt werden. Das Verfahren der Herstellung von Membranen durch Aufbringen und Verfestigen einer Suspension auf einen Träger an und für sich ist aus WO 99/15262 bekannt, jedoch lassen sich nicht alle Parameter bzw. Einsatzstoffe, auf die Herstellung der erfindungsgemäß verwendeten Membran übertragen. Der Prozess, der in WO 99/15262 beschrieben wird, ist in dieser Form insbesondere nicht ohne Abstriche auf polymere Vliesmaterialien übertragbar, da die dort beschriebenen sehr wasserhaltigen Solsysteme, häufig keine durchgängige Benetzung der üblicherweise hydrophoben Polymervliese in der Tiefe ermöglichen, da die sehr wasserhaltigen Solsysteme die meisten Polymervliese nicht oder nur schlecht benetzen. Es wurde festgestellt, dass selbst kleinste unbenetzte Stellen im Vliesmaterial dazu führen können, dass Membranen erhalten werden, die Fehler aufweisen und damit unbrauchbar sind.

Es wurde nun überraschenderweise gefunden, dass ein Solsystem bzw. eine Suspension, welches bzw. welche im Benetzungsverhalten den Polymeren angepasst wurde, die Vliesmaterialien vollständig durchtränkt und somit erfindungsgemäß verwendbare Membranen zugänglich macht. Bevorzugt erfolgt bei dem Verfahren deshalb eine Anpassung des Benetzungsverhaltens des Sols bzw. der Suspension. Diese Anpassung erfolgt vorzugsweise durch die Herstellung von polymeren Solen bzw. Suspensionen aus polymeren Solen wobei diese Sole einen oder mehrere Alkohole, wie z. B. Methanol, Ethanol oder Propanol oder Mischungen, die einen oder mehrere Alkohole sowie, vorzugsweise aliphatische Kohlenwasserstoffe aufweisen, umfassen. Es sind aber auch andere Lösemittelgemische denkbar, die dem Sol bzw. der Suspension zugegeben werden können, um diese im Benetzungsverhalten an das verwendete Substrat anzupassen.

Es wurde festgestellt, dass die grundlegende Änderung des Solsystems und der daraus resultierenden Suspension zu einer deutlichen Verbesserung der Haftungseigenschaften der keramischen Komponenten auf dem und in einem polymeren Vliesmaterial führt. Solche guten Haftfestigkeiten sind mit partikulären Solsystemen normalerweise nicht erhältlich. Vorzugsweise werden deshalb Substrate, die Polymerfasern aufweisen, mittels Suspensionen beschichtet, die auf polymeren Solen basieren oder in einem vorgeschalteten Schritt durch Behandlung mit einem polymeren Sol mit einem Haftvermittler ausgerüstet wurden.

Es kann vorteilhaft sein, wenn zur Herstellung der Suspension als anorganische Komponente, zumindest ein Oxid, ausgewählt aus den Oxiden der Elemente Y, Zr, Al, Si, Sn, und Ti, in einem Sol suspendiert wird. Vorzugsweise wird eine anorganische Komponente, die zumindest eine Verbindung, ausgewählt aus Aluminiumoxid, Titandioxid, Zirkonoxid und/oder Siliziumdioxid, suspendiert. Vorzugsweise beträgt der Massenanteil der suspendierten Komponente das 0,1 bis 500-fache, besonders bevorzugt das 1 bis 50-fache und ganz besonders bevorzugt das 5 bis 25-fache des eingesetzten Sols.

Es kann vorteilhaft sein, wenn zumindest eine anorganische Komponente, welche eine mittlere Korngröße von 1 bis 10000 nm, vorzugsweise von 1 bis 10 nm, 10 bis 100 nm, 100 bis 1000 nm oder 1000 bis 10000 nm, besonders bevorzugt von 250 bis 1750 nm und ganz besonders bevorzugt von 300 bis 1250 nm aufweist, in zumindest einem Sol suspendiert wird. Durch die Verwendung von anorganischen Komponenten, die eine mittlere Korngröße von 250 bis 1250 nm aufweisen, wird eine besonders gut geeignete Biegsamkeit und Porosität der Membran erreicht.

Zur Verbesserung der Haftung der anorganischen Komponenten an Polymerfasern als Substrat kann es vorteilhaft sein, den eingesetzten Suspensionen Haftvermittler, wie z. B. organofunktionelle Silane oder auch reine Oxide wie ZrO₂, TiO₂, SiO₂ oder Al₂O₃ beizufügen. Wobei das Beifügen der Haftvermittler insbesondere zu Suspensionen auf Basis von polymeren Solen bevorzugt ist. Als Haftvermittler sind insbesondere Verbindungen, ausgewählt aus den Octylsilanen, den fluorierten Octylsilanen, den Vinylsilanen, den aminfunktionalisierten Silanen und/oder den Glycidyl-funktionalisierten Silanen, wie z. B. die Dynasilane der Fa. Degussa einsetzbar. Besonders bevorzugte Haftvermittler für Polytetrafluorethylen (PTFE) sind z. B. Fluorierte Octylsilane, für Polyethylen (PE) und Polypropylen (PP) sind es Vinyl-, Methyl- und Octylsilane, wobei eine ausschließliche Verwendung von Methylsilanen nicht optimal ist, für Polyamide und Polyamine sind es Aminfunktionelle Silane, für Polyacrylate und Polyester sind es Glycidyl-funktionalisierte Silane und für Polyacrylnitril kann man auch Glycidylfunktionalisierte Silane einsetzen. Auch andere Haftvermittler sind einsetzbar, die aber auf die jeweiligen Polymere abgestimmt sein müssen. Der in WO 99/15262 beschriebene Zusatz von Methyltriethoxysilan zum Solsystem bei der Beschichtung von polymeren Trägermaterialien ist eine vergleichsweise schlechte Lösung des Problems der Haftfestigkeit von Keramik auf Polymerfasern. Zudem ist die Trocknungsdauer von 30 bis 120 Min. bei 60 bis 100 °C bei den beschriebenen Solsystemen nicht ausreichend um hydrolysebeständige keramische Materialien zu erhalten. Das heißt diese Materialien werden sich bei längerer Lagerung in wasserhaltigen Medien auflösen bzw. sie werden beschädigt werden. Andererseits würde die in WO 99/15262 beschriebene Temperaturbehandlung von über 350 °C zu einem Verbrennen des hier verwendeten Polymervlieses und damit zur Zerstörung der Membran führen. Die Haftvermittler müssen also so ausgewählt werden, dass die Verfestigungstemperatur unterhalb des Schmelz- oder Erweichungspunktes des Polymeren und unterhalb dessen Zersetzungstemperatur liegt. Bevorzugt weisen erfindungsgemäße Suspensionen deutlich weniger als 25 Gew.-%, vorzugsweise weniger als 10 Gew.-% Verbindungen auf, die als Haftvermittler fungieren können. Ein optimaler Anteil an Haftvermittler ergibt sich aus der Beschichtung der Fasern und/oder Partikel mit einer monomolekularen Lage des Haftvermittlers. Die hierzu benötigte Menge an Haftvermittler in Gramm kann durch Multiplizieren der Menge der eingesetzten Oxide, beziehungsweise der Fasern (in g) mit der spezifischen Oberfläche der Materialien (in m²g⁻¹) und anschließendes Dividieren durch den spezifischen Platzbedarf der Haftvermittler (in m² g⁻¹) erhalten werden, wobei der spezifische Platzbedarf häufig in der Größenordnung von 300 bis 400 m² g⁻¹ liegt.

Die folgende Tabelle enthält einen beispielhaften Überblick über einsetzbare Haftvermittler auf Basis von organofunktionellen Si-Verbindungen für typische als Vliesmaterial verwendete Polymere.

| Polymer | Organofunktionstyp | Haftvermittler |
|---|---|---|
| PAN | Glycidyl | GLYMO |
| | Methacryl | MEMO |
| PA | Amino | AMEO, DAMO |
| PET | Methacryl | MEMO |
| | Vinyl | VTMO, VTEO, VTMOEO |
| PE, PP | Amino | AMEO, AMMO |
| | Vinyl | VTMO, VTEO, Silfin |
| | Methacryl | MEMO |

Mit:
AMEO = 3-Aminopropyltriethoxysilan
DAMO = 2-Aminoethyl-3-aminopropyltrimethoxysilan
GLYMO = 3-Glycidyloxytrimethoxysilan
MEMO = 3-methacryloxypropyltrimethoxysilan
Silfin = Vinylsilan + Initiator + Katalysator
VTEO = Vinyltriethoxysilan
VTMO = Vinyltrimethoxysilan
VTMOEO = Vinyltris(2-methoxyethoxy)silan

Die Beschichtungen der erfindungsgemäß verwendeten Membrane werden durch Verfestigen der Suspension in und auf dem Substrat auf das Substrat aufgebracht. Erfindungsgemäß kann die auf und im Substrat vorhandene Suspension durch Erwärmen auf 50 bis 350 °C verfestigt werden. Da bei der Verwendung polymerer Substratmaterialien die maximal Temperatur durch das Substrat vorgegeben wird, ist diese entsprechend anzupassen. So wird je nach Ausführungsvariante des Verfahrens die auf und im Substrat vorhandene Suspension durch Erwärmen auf 100 bis 350 °C und ganz besonders bevorzugt durch Erwärmen auf 110 bis 280 °C verfestigt. Es kann vorteilhaft sein, wenn das Erwärmen für 1 Sekunde bis 60 Minuten bei einer Temperatur von 100 bis 350 °C erfolgt. Besonders bevorzugt erfolgt das Erwärmen der Suspension zum Verfestigen auf eine Temperatur von 110 bis 300 °C, ganz besonders bevorzugt bei einer Temperatur von 110 bis 280 °C und vorzugsweise für 0,5 bis 10 Min.

Bei der Verfestigung der Membran kann es je nach gewählter Temperaturhöhe bei einigen Polymermaterialien unter dem Temperatureinfluss zu Veränderungen in der chemischen Struktur kommen, so dass anschließend die Polymere nicht mehr in ihrem Ausgangszustand bzw. -modifikation vorliegen. So kann es zu einer teilweisen Karbonisierung von Polyimiden oder zur Bildung sogenannter Leiterpolymere bei Polyacrylnitril mit nachfolgender teilweiser Karbonisierung kommen. Diese Effekte führen immer zu einer Veränderung der Eigenschaften der Trägerwerkstoffe. Dies kann je nach Anwendung auch speziell beabsichtigt werden, da dadurch beispielsweise die Lösemittel-, Säure- und Laugebeständigkeit erhöht werden kann. Der Grad der Umwandlung kann dabei über Temperatur und Zeit beeinflusst werden.

Das Erwärmen des Verbundes kann mittels erwärmter Luft, Heißluft, Infrarotstrahlung oder durch andere Erwärmungsmethoden nach dem Stand der Technik erfolgen.

In einer besonderen Ausführungsform des Verfahrens werden die oben genannten Haftvermittler in einem vorgeschalteten Schritt auf das Substrat, insbesondere das Polymervlies aufgebracht. Hierzu werden diese in einem geeigneten Lösemittel, wie z. B. Ethanol gelöst. Diese Lösung kann auch noch eine geringe Menge an Wasser, vorzugsweise die 0,5 bis 10-fache Menge bezogen auf die molare Menge der hydrolysierbaren Gruppe, und kleine Mengen einer Säure, wie z. B. HCl oder HNO₃, als Katalysator für die Hydrolyse und Kondensation der Si-OR-Gruppen enthalten. Durch die bekannten Techniken, wie z. B. Aufsprühen, Aufdrucken, Aufpressen, Einpressen Aufrollen, Aufrakeln, Aufstreichen, Tauchen, Spritzen oder Aufgießen wird diese Lösung auf das Substrat aufgebracht und der Haftvermittler durch eine Temperaturbehandlung bei 50 bis maximal 350 °C auf dem Substrat fixiert. Erst nach dem Aufbringen des Haftvermittlers erfolgt bei dieser Ausführungsvariante des erfindungsgemäßen Verfahrens das Aufbringen und Verfestigen der Suspension.

In einer anderen Ausführungsvariante des Verfahrens werden haftvermittelnde Schichten in einem Vorbehandlungsschritt, bei dem ein polymeres Sol, aufgebracht und verfestigt wird, aufgebracht. Das Aufbringen und Verfestigen des polymeren Sols erfolgt vorzugsweise auf dieselbe Weise wie das Aufbringen und Verfestigen der Suspensionen. Durch das Aufbringen dieser polymeren Sole werden die Substrate, insbesondere die Polymervliese mit einem Oxid von Al, Ti, Zr oder Si als Haftvermittler ausgerüstet, wodurch das Substrat hydrophil ausgestattet wird. So ausgerüstete Substrate können dann nach dem in WO 99/15262 beschriebenen Stand der Technik bzw. wie oben beschrieben mit einer porösen Beschichtung ausgerüstet werden, wobei durch die Vorbehandlung eine deutlich bessere Haftung der Beschichtung, insbesondere auf Polymervliesen beobachtet werden kann.

Ein typisches polymeres Sol für eine Vorbehandlung stellt etwa eine 2 bis 10 Gew.-%ige alkoholische Lösung eines Metallalkoholats (wie z. B. Titanethylat oder Zirkoniumpropylat) dar, das noch zusätzlich 0,5 bis 10 mol-Anteile Wasser sowie geringe Mengen einer Säure als Katalysator enthalten kann. Nach Aufbringen eines solchen Sols auf das Substrat werden die Substrate, vorzugsweise Polymervliese bei einer Temperatur von maximal 350 °C behandelt. Dabei entsteht ein dichter Film aus einem Metalloxid um die Substratfasern herum, wodurch eine Infiltration des Substrates mit einer Suspension bzw. einem Schlicker auf Basis eines kommerziellen Zirkonnitratsols oder Silicasols ohne Benetzungsschwierigkeiten möglich ist.

Da polymere Sole eher dichte Filme bilden als partikuläre und die partikulären Sole zudem immer größere Mengen an Wasser im Porengefüge der Zwischenkornvolumina besitzen, ist es einfacher polymere Sole zu trocknen als partikulärer Sole. Trotzdem müssen die Membranen bei Temperaturen von über 150 °C getrocknet werden, damit das keramische Material eine genügend gute Haftfestigkeit auf dem Träger erhält. Besonders gute Haftfestigkeiten lassen sich bei einer Temperatur von mindesten 200 °C und ganz besonders gute Festigkeiten bei einer Temperatur von mindestens 250 °C erzielen. Allerdings sind hierfür dann entsprechend temperaturstabile Polymere zwingend erforderlich, wie etwa Polyethylenterephthalat (PET), Polyacrylnitril (PAN), Polytetrafluorethylen (PTFE), Polyvinylidenfluorid (PVDF) oder Polyamid (PA). Ist der Träger nicht genügend temperaturstabil, so kann durch eine Vortrocknung bei geringeren Temperatur (bis 100 °C) zunächst eine Vorverfestigung der Membran erfolgen. Bei der Nachverfestigung bei erhöhter Temperatur wirkt dann die Keramikschicht als Stütze für den Support, so dass es nicht mehr zu einem Wegschmelzen des Substrates kommen kann. Diese Verfahrensparameter gelten nicht nur für das Aufbringen und Verfestigen eines polymeren Sols z. B. als Haftvermittler sondern auch für das Aufbringen und Verfestigen von Suspensionen auf Basis von polymeren Solen.

Durch beide Ausführungsarten des Aufbringens eines Haftvermittlers vor dem eigentlichen Aufbringen der Suspension kann das Haftverhalten der Substrate insbesondere gegenüber wässrigen, partikulären Solen verbessert werden, weshalb insbesondere so vorbehandelte Substrate mit Suspensionen auf Basis von handelsüblichen Solen, wie z. B. Zirkonnitratsol oder Silicasol erfindungsgemäß beschichtet werden können. Diese Vorgehensweise des Aufbringens eines Haftvermittlers bedeutet aber auch, dass das Herstellverfahren der erfindungsgemäß verwendeten Membran um einen Zwischen- bzw. Vorbehandlungsschritt erweitert werden muss. Dies ist machbar allerdings auch aufwendiger als die Verwendung von angepassten Solen denen Haftvermittler beigegeben wurden, hat aber auch den Vorteil, dass auch beim Einsatz von Suspensionen auf Basis von handelsüblichen Solen bessere Ergebnisse erzielt werden.

Das Verfahren kann z. B. so durchgeführt werden, dass das Substrat von einer Rolle abgerollt wird, mit einer Geschwindigkeit von 1 m/h bis 2 m/s, vorzugsweise mit einer Geschwindigkeit von 0,5 m/min. bis 20 m/min und ganz besonders bevorzugt mit einer Geschwindigkeit von 1 m/min bis 5 m/min durch zumindest eine Apparatur, welche die Suspension auf und in den Support bringt, wie z. B. eine Walze und zumindest eine weitere Apparatur, welche das Verfestigen der Suspension auf und in dem Support durch Erwärmen ermöglicht, wie z. B. eine elektrisch beheizter Ofen, durchläuft und die so hergestellte Membran auf einer zweiten Rolle aufgerollt wird. Auf diese Weise ist es möglich, die erfindungsgemäße Membran im Durchlaufverfahren herzustellen. Auch die Vorbehandlungsschritte können im Durchlaufverfahren unter Beibehaltung der genannten Parameter durchgeführt werden.

## Patentansprüche

1. Verwendung einer Membran, umfassend ein flächiges, mit einer Vielzahl von Öffnungen versehenes, flexibles Substrat mit einer auf und in diesem Substrat befindlichen porösen keramischen Beschichtung,
wobei das Material des Substrates ausgewählt ist
aus Vliesen von Polymerfasern, wobei die Vliese eine Porosität von 50 % bis 97 % aufweisen, und
die inneren und äußeren Oberflächen der in der Beschichtung vorhandenen keramischen Partikel zumindest teilweise eine peptisierte, hydrophobe Sol-Gel-Schicht aufweisen,
als Membran für die Aufnahme und Abgabe von Wasser aus Luft und von Oberflächen.

2. Verwendung nach Anspruch 1 als Geräteeinsatz in Geräten für die Be- und/oder Entfeuchtung von Raumluft, Geräteluft.

3. Verwendung nach Anspruch 1 als Membran oder Wandbelag zur Aufnahme von Feuchtigkeit aus porösem Baumaterial.

4. Verwendung nach Anspruch 1 als Rollenmaterial zur Trocknung und/oder Befeuchtung von Bahnenware oder gedruckten Strukturen.

5. Verwendung nach Anspruch 1 als Membran oder Einlage in Textilien für Berufs- und Sportbekleidung, Camping- und Sport-, Spiel- und Freizeitausstattung, Büromöbel, Polstermöbel.
